# EUROPEAN PATENT SPECIFICATION

(11) **EP 1 227 199 B1**
(45) Date of publication and mention of the grant of the patent: **19.11.2003**
(21) Application number: 99936621.4
(22) Date of filing: 28.07.1999
(51) Int. Cl.: E04C 1/00, C04B 22/06, C04B 7/00, C04B 14/16, C04B 26/10

(54) **COMPOSITION FOR THE FABRICATION OF SILICATE PLATES**
ZUSAMMENSETZUNG ZUR HERSTELLUNG VON SILIKATPLATTEN
COMPOSITION INDIQUEE POUR LA FABRICATION DE PLAQUES DE SILICATE

(43) Date of publication of application: 31.07.2002
(73) Proprietor: Uralita de Productos Y Servicios, S.A., 28004 Madrid (ES)
(72) Inventor: TEJERA MARTINEZ, José Maria, E-28004 Madrid (ES)
(74) Representative: Esteban Perez-Serrano, Maria Isabel
(86) International application number: PCT/ES99/00239
(87) International publication number: WO 01/007728

(56) References cited:
- EP-A- 0 384 898
- EP-A- 0 599 458
- WO-A-97/08111
- US-A- 5 308 397

## Description

### OBJECT OF THE INVENTION

The present invention relates to a composition for manufacturing silicate plates which can be used as base for construction materials or decorative materials in construction work, such as in pavements, murals and roofing. The invention also relates to such silicate plates and to their manufacturing process.

### BACKGROUND OF THE INVENTION

The use of bases meant to receive other construction or decoration materials, such as brick, tiles, floortiles, etc. in order to build murals pavements or roofing is well known in the construction industry.

The composition of these bases can vary considerably, depending on the material to be supported, such as plaster, cement, mortar, etc. Likewise, their shape can also be quite varied although of late plates of suitable sizes and finishings predominate (cf. for example WO 97 08111A or US 5 308 397 A).

Bases used for construction must fulfill certain important properties, among which are that the base material have good adhesive properties to the material which is to be deposited. In addition, it would be advantageous for the material of these bases to have a coefficient of expansion similar to that of the construction or decoration material which will be deposited on it.

Although many bases are used in construction composed of several different materials meant to receive other materials, the construction industry still demands new materials which may be used for bases which provide a suitable base to receive other construction or decoration materials, which have the above described properties. Use of such bases would allow to reduce the thickness of the construction or decorative material to be used, resulting in reduced expenses for material and its transport while carrying out a similar constructive or ornamental task.

The invention provides a solution to the existing problem which consists of developing a suitable composition for manufacturing silicate plates which may be used as a base for construction or decoration materials in construction work. The invention also relates to such silicate plates and their manufacturing process.

### DETAILED DESCRIPTION OF THE INVENTION

The invention provides a suitable composition for manufacturing silicate plates which may be used as a base for construction or decoration materials in construction work, hereinafter 'composition of the invention', which comprises:

| Component | % weight of total |
|---|---|
| Silica | 40-50 |
| Cement | 20-35 |
| Sand | 5-10 |
| Cellulose fibre | 4-8 |

All these components are known and can be easily found in the market.

The silica preferably has a specific surface area between 3,000 and 4,000 cm²/g.

The cement, which can be Portland cement, preferably has a specific surface area between 2,500 and 3,500 cm²/g.

Although any sand normally used in construction may be employed, it is best to use silicate sand with an average grain size between 80 and 100 micrometers (µm).

The cellulose fibres can in general result from a Kraft wood treatment process of e.g. pine, eucalyptus, etc. In the specific embodiment of this invention cellulose fibres result from pine and eucalyptus in a pine: eucalyptus weight ratio of 2/3:1/3

The composition of the invention may also contain several additives which help to improve the processability of the composition of the invention or the properties of the plate which may be obtained, such as waterproofing agents and agents which increase the dimensional stability of the plate.

As a waterproofing agent may be used any organic or inorganic waterproofing agents and their mixtures, generally used in construction, such as sodium and potassium silicate, stereates such as calcium stereates, etc. If the composition of the invention includes a waterproofing agent this may be present in it in an amount between 2% and 4% by weight with respect to the total weight of the composition.

As a dimensional stability adding agent can be used any compound which can reduce the humidity of the composition of the invention and the resulting plate, such as alumina, kaolin, etc. and their mixtures. The composition of the invention may include one or more agents to increase the dimensional stability of the plate, in which case each agent may be present in the composition of the invention in an amount between 0% and 6% with respect to the total weight of the composition.

The composition of the invention may be easily obtained by mixing the different components in the right proportions.

The composition of the invention is suitable for creating a silicate plate, hereinunder silicate plate of the invention, which may be used as a base for construction or decoration materials in construction work. The silicate plate of the invention may be easily manufactured in a Hatschek type machine.

Therefore, the silicate plate of the invention can be obtained by a process which comprises:
a) giving shape to the plate from an aqueous paste of a mixture which includes the composition of the invention, i.e., it consists in dry weight of 40-50% silica, 20-35% cement, 5-10% sand, and 4-8% cellulose fibres optionally, as well as one or more waterproofing agents and/or agents which increase the dimensional stability of the plate.
b) compressing the shaped plate in a press in order to reduce its thickness and increase its density.
c) removing the shaped plate from such press and
d) carrying out a curing process on this plate in an autoclave.

The silicate plate of the invention may be formed as a flat plate, although if desired it can be made in any other shape, such as a corrugated one.

During the curing process in an autoclave of the formed plate a reaction takes place between the components, particularly between the silica and the cement, forming a bonding die. The cement acts as an agglomerant, the silica as a reactant in the autoclave to generate calcium silicates, the cellulose fibres act as reinforcement material and fibre to form the plate in the Hatschek machine and the sand is meant to reduce the humidification movement of the product, which helps increase the dimensional stability of the plate. This increase in the dimensional stability may be improved by adding a suitable agent such as alumina, kaolin or their mixtures. The kaolin also improves processability in the Hatschek machine and helps waterproofing of the product. This goal may be improved by incorporating to the composition one or more waterproofing agents.

The silicate plates of the invention, obtained by the above described procedure, constitute a further object of this invention.

A silicate plate representative of the invention has among other properties the following: density higher than 1.5 kg/dm³, a resistance to pressure above 10MPa (megapascals) and a dimensional variation between the dry and saturated states on the order of 0.3%.

The silicate plate of the invention is suitable for use in construction, particularly as a support material for receiving construction or decorative materials such as tiles, floortiles, bricks, marble, stone, etc. in order to build pavements, murals and roofing.

### PREFFERED EMBODIMENT

As indicated in the detailed description the cellulose fibres are from pine and eucalyptus from a Kraft process, the remainder is silica, Portland cement, silicate sand with an average grain size between 80 and 100 micrometers (µm), equal proportions of sodium and potassium silicate as waterproofing agents, as stabilising agents kaolin and finally alumina in a proportion three times that of the kaolin.

The composition in percentage weight with respect to total weight is the following:

| Component | %weight with respect to total |
|---|---|
| Pine fibre | 4 |
| Eucalyptus fibre | 2 |
| Silica | 50 |
| Cement | 20 |
| Sand | 10 |
| Kaolin | 6 |
| Silicate | 2 |
| Alumina | 6 |

## Claims

1. A suitable composition for manufacturing silicate plates, which comprises:
| Component | % weight of total |
|---|---|
| Silica | 40-50 |
| Cement | 20-35 |
| Sand | 5-10 |
| Cellulose fibre | 4-8 |

2. Composition as in claim 1, in which such silica has a specific surface area between 3,000 and 4,000 cm²/g.

3. Composition as in claim 1, in which such cement is a Portland type cement.

4. Composition as in claim 2, in which such cement has a specific surface area between 2,500 and 3,500 cm²/g.

5. Composition as in claim 1, in which such sand is a silicate sand with an average grain size of 100 micrometers (µm).

6. Composition as in claim 1, which also includes one or more additives chosen from among waterproofing agents and agents which increase the dimensional stability of the plate.

7. Composition as in claim 6, where said waterproofing agents are chosen from among the group formed by organic waterproofing agents, inorganic waterproofing agents, and their mixtures.

8. Composition as in claim 7, in which said waterproofing agents are chosen from among the group formed by sodium and potassium silicate, calcium stearate and their mixtures.

9. Composition as in claim 8, in which said waterproofing agents are present in the composition in amounts ranging between 2% and 4% by weight with respect to the total composition weight.

10. Composition as in claim 6, in which said agents which increase the dimensional stability of the plate are chosen from among the group formed by alumina, kaolin and their mixtures.

11. Composition as in claim 6, in which said agents which increase the dimensional stability of the plate are present in the composition in an amount between 0% and 6% by weight of the total composition weight.

12. A process for manufacture of a silicate plate which comprises:
a) shaping said plate from an aqueous paste of a mixture with a composition according to any of claims 1 to 11 in dry weight;
b) compressing the shaped plate in a press in order to reduce its thickness and increase its density.
c) removing the shaped plate from such press and
d) carrying out a curing process on this plate in an autoclave.

## Patentansprüche

1. Eine geeignete Zusammensetzung zur Herstellung von Silikatplatten, die Folgendes umfasst:
| Zusammensetzung | % am Gesamtgewicht |
|---|---|
| Silizium | 40 - 50 |
| Zement | 20-35 |
| Sand | 5-10 |
| Zellstofffaser | 4-8 |

2. Zusammensetzung gemäss Anspruch 1, wobei das Silizium einen spezifischen Oberflächenbereich zwischen 3.000 und 4.000 cm² /g hat.

3. Zusammensetzung gemäss Anspruch 1, wobei es sich bei diesem Zement um Portlandzement handelt.

4. Zusammensetzung gemäss Anspruch 2, wobei dieser Zement einen spezifischen Oberflächenbereich zwischen 2.500 und 3.500 cm² .

5. Zusammensetzung gemäss Anspruch 1, wobei dieser Sand ein Silikatsand ist, dessen durchschnittliche Körnergrösse 100 Mickrometer (µm) beträgt.

6. Zusammensetzung gemäss Anspruch 1, die ausserdem einen oder mehr Zusätze umfasst, die zwischen imprägnierenden Zusätzen und solchen, die die Formbeständigkeit der Platte erhöhen, gewählt werden.

7. Zusammensetzung gemäss Anspruch 6, wobei die besagten imprägnierenden Zusätze aus einer Gruppe ausgewählt werden, die aus organischen, imprägnierenden Zusätzen, anorganischen, imprägnierenden Zusätzen und ihren Mischungen besteht.

8. Zusammensetzung gemäss Anspruch 7, wobei die besagten imprägnierenden Zusätze aus einer Gruppe ausgewählt werden, die aus Natriumsilikat, Kaliumsilikat, Calciumstearat und ihren Mischungen besteht.

9. Zusammensetzung gemäss Anspruch 8, wobei besagte imprägnierende Zusätze in der Zusammensetzung in Mengen zwischen 2% und 4% des Gesamtgewichts der Zusammensetzung vorhanden sind.

10. Zusammensetzung gemäss Anspruch 6, wobei die besagten Zusätze, die die Formbeständigkeit der Platte erhöhen, aus einer Gruppe ausgewählt werden, die aus Aluminiumoxyd, Kaolin und ihren Mischungen besteht.

11. Zusammensetzung gemäss Anspruch 6, wobei die besagten Zusätze, die die Formbeständigkeit der Platte erhöhen in der Zusammensetzung in Mengen zwischen 0% und 6% des Gesamtgewichts der Zusammensetzung vorhanden sind.

12. Ein Verfahren zum Herstellen von Silikatplatten, das Folgendes umfasst:
a) Besagte Platte aus einer wasserhaltigen Paste formen, die aus einer Mischung mit der Zusammensetzung gemäss der Ansprüche 1-11 im Trockengewicht besteht,
b) Die geformte Platte pressen, um die Dicke zu verringern und die Dichte zu erhöhen,
c) Die geformte Platte aus der Presse nehmen und
d) einen Aushärtungsprozess dieser Platte in einem Autoklav durchführen.

## Revendications

1. Une composition appropriée pour la fabrication de plaques de silicate, qui comprend :
| Composant | % en poids du total |
|---|---|
| Silice | 40-50 |
| Ciment | 20-35 |
| Sable | 5-10 |
| Fibre cellulosique | 4-8 |

2. Une composition selon la revendication 1, dans laquelle ladite silice a une superficie spécifique entre 3000 et 4000 cm²/g.

3. Une composition selon la revendication 1, dans laquelle ledit ciment est un ciment de type Portland.

4. Une composition selon la revendication 2, dans laquelle, ledit ciment a une superficie spécifique entre 2500 et 3500 cm²/g.

5. Une composition selon la revendication 1, dans laquelle ledit sable est un sable au silicate avec une granulométrie moyenne de 100 micromètres (µm).

6. Une composition selon la revendication 1, qui inclut aussi un ou plusieurs aditifs choisis parmi les agents d'étanchéité et les agents qui incrémentent la stabilité dimensionnelle de la plaque.

7. Une composition selon la revendication 6, dans laquelle lesdits agents d'étanchéité sont choisis parmi le groupe formé d'agents organiques d'étanchéité, d'agents inorganiques d'étanchéité, et de leurs mélanges.

8. Une composition selon la revendication 7, dans laquelle lesdits agents d'étanchéité sont choisis parmi le groupe formé de sodium et de silicate de sodium, stéarate de calcium et leurs mélanges.

9. Une composition selon la revendication 8, dans laquelle les dits agents d'étanchéité sont présents dans la composition dans des quantités allant de 2% à 4% en poids par rapport au poids total de la composition.

10. Une composition selon la revendication 6, dans laquelle les agents qui incrémentent la stabilité dimensionnelle des plaques sont choisis parmi le groupe formé d'alumine, caolin et leurs mélanges.

11. Une composition selon la revendication 6, dans laquelle lesdits agents qui incrémentent la stabilité dimensionnelle de la plaque sont présents dans la composition dans des quantités allant de 0 à 6% en poids du poids total de la composition.

12. Un procédé de fabrication d'une plaque de silicate qui comprend:
a) la mise en forme de ladite plaque à partir d'une pâte aqueuse d'un mélange avec une composition selon l'une quelconque des revendications 1 à 11 de poids à sec,
b) la compression de la dite plaque conformée dans une presse afin de réduire son épaisseur et incrémenter sa densité,
c) le retrait de la plaque conformée de ladite presse et
d) la mise en oeuvre d'un procédé de durcissement sur cette plaque dans un autoclave.
